# EUROPEAN PATENT APPLICATION

(11) **EP 1 941 801 A2**
(43) Date of publication of application: **09.07.2008**
(21) Application number: 06820009.6
(22) Date of filing: 03.10.2006
(51) Int. Cl.: A22C 25/18, B26D 3/18

(54) **SYSTEM FOR CUTTING FOOD PRODUCTS FOR PACKING PURPOSES**

(30) Priority: 05.10.2005 ES 200502404; 16.06.2006 ES 200601620
(71) Applicant: Metronics Technologies S.L., 31110 Noain (ES)
(72) Inventor: GUTIERREZ ARTOLA, Camilo José, E-31110 Noain (Navarra) (ES)
(74) Representative: Evens, Paul Jonathan
(86) International application number: PCT/ES2006/000548
(87) International publication number: WO 2007/039657

(57) **Abstract**

The invention relates to a system for cutting food products for packing purposes, comprising an area (1) at which large blocks (2) of the products are supplied, followed by a cutting zone (3) in which the blocks (2) are divided into flat slices (4) which are distributed through parallel cutting channels, in which the slices (4) are divided into pieces (12) which are in turn cut into a quadrangular portion which is conveyed to a packing chain by means of an unloading device.

## Description

### Field of the Art

The present invention is related to the food handling sector for preparing foods intended for packing, proposing a cutting system which allows automatically carrying out the entire process for configuring the pieces necessary for packing from an original block.

### State of the Art

The commercial preparation of many food products in protective packages is common, such as canned fish such as tuna and others for example, tin packages conventionally being used for this type of canned food, which have the drawback of the metal degrading and its possible repercussions on the packaged food as well as the difficulties of opening them, with the risk of cuts and stains.

Tetrabrick canned food packing solutions have been developed in order to eliminate these drawbacks, applying the already very well known system to drinks and certain liquid products.

The food products must be cut into pieces in a manner suitable to the type of packing and corresponding package in order to be included in the corresponding packages, which cutting can be provided, for example, according to cutting into individually removable portions for consumption.

The products for packing are generally cut or portioned from an original block, such as the filleted, peeled and clean body in the case of tuna or similar fish for example, being necessary for cutting, which work is very difficult from a manual perspective and which also does not allow calibrating the measurement of the pieces with correct accuracy, therefore the cost-effectiveness and adaptation of the process requires automation which must however comply with very particular specifications due to the different phases and operations which have to be carried out.

### Object of the Invention

According to the invention a system is proposed which allows automating the cutting of food for the function of the mentioned packing in a practical and advantageous manner, satisfactorily solving the requirements which are necessary for that purpose.

This system object of the invention comprises a series of operating phases, by means of which the treatment of the product is carried out from its state in an original block to the supply in pieces and in the suitable shape for packing.

The system comprises a supply area individually supplying the original blocks of the products from a storage for stacking such blocks to a cutting phase in which the original block is divided into flat slices, comprising a calibration control which determines the thickness of the slices depending on the size of the original block, so that the number of resulting slices is precise, within predetermined thickness measurement margins.

After the phase for cutting into slices the system comprises a positioning by means of a conveyor in order to place the slices correspondingly in relation to parallel independent channels for cutting the slices into pieces, including a turning device in the positioning which brings the slices of the product down to a horizontal position to cut it into pieces.

Each channel for cutting the slices of the product into pieces comprises transporting the slices through a cutting into pieces, followed by separating the pieces in relation to respective portion paths for portioning each of the pieces.

Each portion path in turn comprises transport by means of pushers through two successive cuts by means of a water jet, between which there is arranged a rotator which changes the position of the pieces 90 degrees with respect to the forward movement direction, such that by means of the two successive cuts the pieces of the product are cut in respective perpendicular directions, giving rise to a quadrangular portion thereof.

According to an embodiment, the different groups of pushers, which are in the installation for moving the product parts which are being cut in the successive phases of the system in the forward movement, are arranged in a unitary movement assembly, such that all of them are actuated together and at the same time by the same actuation.

The surface for supporting the product parts in the process of the perpendicular cuts is arranged, where appropriate, as a single block which is mobile in height, being assembled on a support assembly formed by four vertical connecting rods, which are actuated together by a single motor transmitting the actuation to all the connecting rods at the same time, such that these rods raise and lower the surface for supporting the products, maintaining it in a horizontal position.

A simple arrangement is thus obtained in which very few actuation means are involved, being, however, completely effective for the movements of the operating process of the system.

In the assembly supporting the mentioned surface for supporting the products to be cut, together with the connecting rods for raising and lowering said surface, two other connecting rods are also associated which are actuated at the same time and by the same motor as said connecting rods supporting the surface for supporting the products in the cutting, these latter two connecting rods supporting partial zones of the platform for supporting the product pieces resulting from cutting the initial slices, whereby an effective separation of the pieces resulting from said cutting is achieved by means of raising some pieces in relation to others in an alternating manner after the cutting.

This also implies a simplification of the actuation means, since said partial zones for supporting the pieces resulting from the product slices are actuated by the same actuation of the vertical movement of the surface for supporting the product parts in the subsequent cutting into pieces.

The rotation of the zones for supporting the product pieces between the perpendicular cuts is carried out by joint actuation by means of a motor and consecutive gears between the rotating zones corresponding to the different cutting paths in the transverse arrangement of the installation, said motor in turn acting by means of connecting rods, the movement of transverse structures determining zones for the passage of the product pieces in order to channel said pieces through the corresponding cutting paths.

At the end of the portion paths there is an unloading device in which the portioned product pieces are collected in order to supply them to a processing chain after being included in the corresponding packages.

Said unloading device of the product portions resulting from the cutting into pieces comprises a structure provided with housings for receiving the product portions in both fronts and which can be turned over to alternate the position of the fronts between the situation for receiving the portions and the situation for unloading them, having, according to a particular embodiment, two motor-driven rotating bars, one on each face of the structural assembly, there being coupled to said bars by means of corresponding rack and pinion assemblies pushers for unloading the portions, such that upon turning over the structure the coupling and decoupling of the bars with the transmission of the drive motor occurs, the bar which, in each case, corresponds to the pushers of the unloading side being coupled to the actuation.

A system is thus obtained which carries out in a fast and balanced manner the entire process for cutting the food products from original blocks, in the end providing a portioning of the product in a suitable arrangement for being supplied to the corresponding packing process, as the cutting process is carried out with optimal use of the products on which it is applied.

The proposed system therefore results from certainly advantageous features, acquiring its own identity and preferred character for the function for which it is intended.

### Description of the Drawings

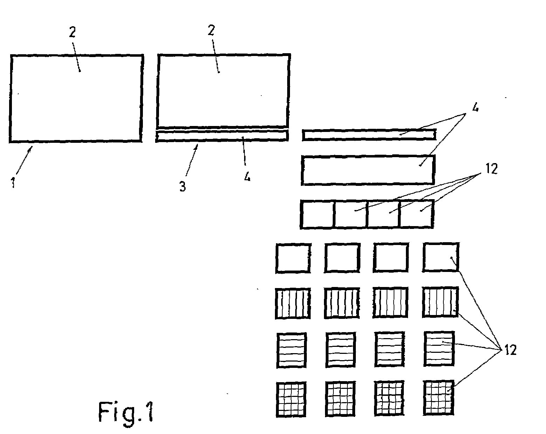

Figure 1 shows a general plan diagram of the cutting system object of the invention.
Figure 2 is a side elevational diagram of the part for portioning the product pieces in the system.
Figure 3 is a perspective view of the part for supplying the product blocks in the system.

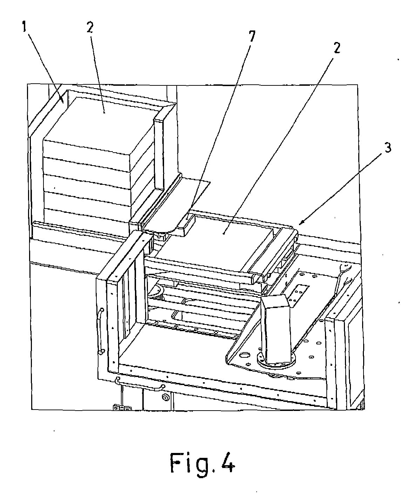

Figure 4 is an enlarged detail of zone IV indicated in the previous figure.
Figure 5 is an enlarged detail of the cutter for cutting the product blocks into slices.
Figure 5A shows a perspective view of the mechanism for positioning of the slices of the product with respect to the corresponding cutting channels.
Figure 6 is a perspective view of the assembly comprising the part for cutting the slices of the product into pieces and the part for portioning the pieces with the output unloading device.
Figure 7 is an enlarged detail of zone VII indicated in the previous figure.
Figure 8 is an enlarged plan view of the assembly of Figure 6 with the upper raising parts sectioned.
Figure 9 is an enlarged perspective view of a detail of the zone for rotating the product pieces between the two cuts of the quadrangular portion.
Figure 9A is a lower perspective view of the zone for rotating the product pieces between the perpendicular cuts.
Figure 9B is an upper perspective view of the zone for channeling the product pieces in relation to the corresponding cutting paths.
Figure 10 is an enlarged perspective view of a detail of the zone for portioning the product pieces.
Figure 10A is a perspective view of the unitary assembly of the pushers of the product pieces through the course of the zones of the cutting process in carrying out the joint movement of all the pushers.
Figure 10B is a perspective view of the structure for supporting the surface for supporting the product pieces by means of raising connecting rods.
Figure 11 is an enlarged perspective view of the unloading device for collecting the portioned product at the end of the cutting system.
Figure 11A is an upper perspective view of the unloading device of the product portions when the pushers are actuated by means of rotating bars.
Figure 11B is a lower perspective view of the unloading device of the previous figure.
Figure 12 is a perspective view of one of the transmission bars for transmitting actuation to the pushers of the previous unloading device.
Figure 13 is an enlarged perspective view of a pusher for removing the product portions in the unloading device.

### Detailed Description of the Invention

The object of the invention relates to a system for automatically cutting food products intended for packing in portions, to be housed in tetrabrick type packages for example, with embodiment features determining a very advantageous operability for that function.

The system comprises a supply area consisting of a storage (1), in which the applied products are stacked in the form of blocks (2), such that by means of a pusher wedge (not depicted) the mentioned product blocks (2) are removed from the storage (1) to a cutting zone (3), in which the blocks (2) are cut into flat slices (4).

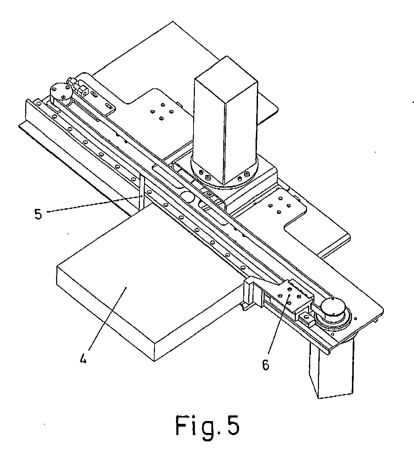

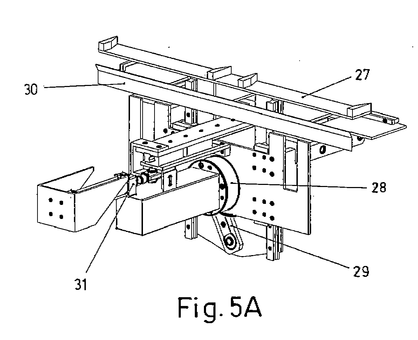

According to a non-limiting practical embodiment, a mechanism formed by a blade (5) is arranged (Figure 5) in the cutting zone (3), by means of which blade the product blocks (2) are cut transversely, the slices (4) being obtained, which slices are moved by a side removal pusher (6) as they are produced.

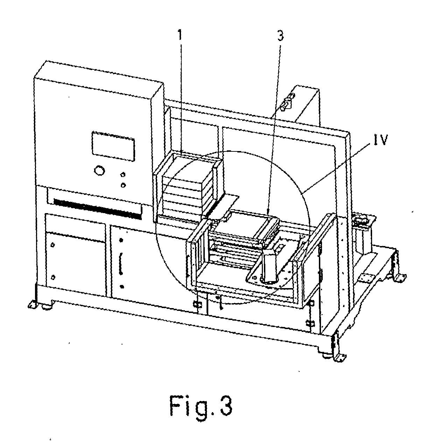

A control (7) measuring the length of the product blocks (2) is included (Figure 3) in said cutting zone (3), performing a calculation depending on said length for adapting the thickness of the slices (4) to be cut so that a whole number of slices is cut according to expected thickness variation measurements, the complete use of each block (2) thus being obtained without wasting product.

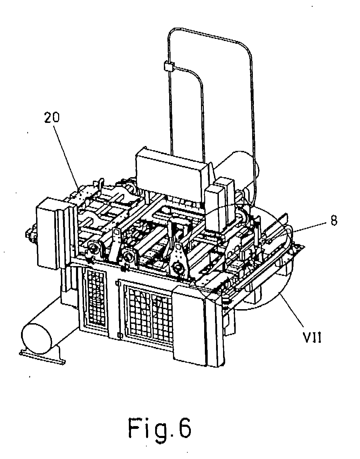

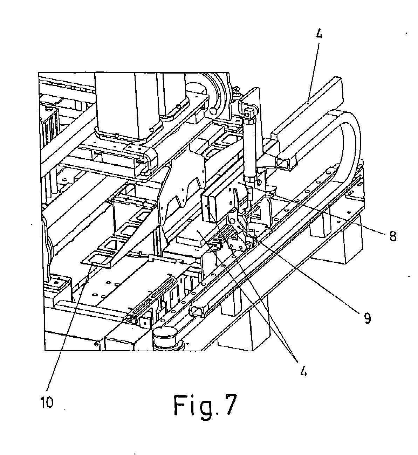

When the slices (4) leave the zone (3) they are collected (Figures 6 to 8) by a conveyor (8) which distributes them by placing them in positions facing different parallel cutting channels, the conveyor (8) comprising a device (9), by means of which the slices (4) are brought down to a horizontal position in which they are deposited in front of the corresponding cutting channels.

According to an embodiment, the product slices are introduced into the cutting channels by means of a positioning and introducing assembly, as shown in Figure 5A, in which a positioning platform (27) is integrated, which can move in height by means of a motor (28) through a connecting rod (29) in order to place the slices of the product in the mouth of the cutting channels, and a pusher (30), which can move by means of a linear actuator (31), for introducing the slices of the product into respective cutting channels, towards which they pass through a cutting system which divides them into pieces.

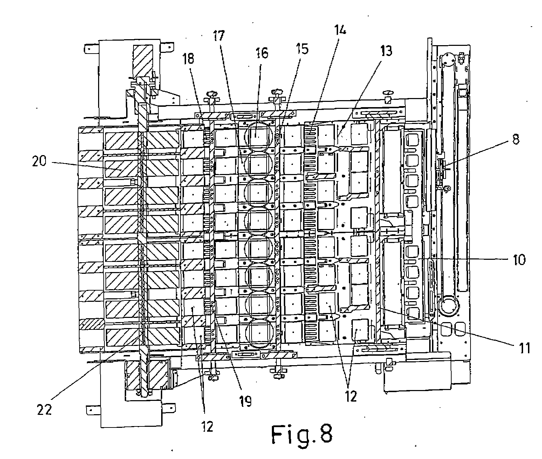

The corresponding product slices (4) are brought forward by means of pushers (10) in each cutting channel (Figure 8), making them pass through a water jet cutter zone (11), where the slices (4) are divided into pieces (12) as they pass through such zone, which pieces are then separated through different paths for continuing the process.

In the mentioned paths through which the product pieces (12) are separately driven, such pieces are introduced by pushers (13) and are then brought forward by other pushers (14), passing through a water jet cutter zone (15), where the pieces (12) are longitudinally cut by a series of cuts as they pass through such zone.

Rotators (16) are arranged in each of the paths after the mentioned cutting zone (15), which rotators rotate the longitudinally cut product pieces (12) to a perpendicular position with respect to the forward movement direction, such pieces then being driven by means of pushers (17) to a position from which other pushers (18) make them pass through another water jet cutter zone (19), where the pieces (12) receive a series of cuts in a direction perpendicular to the previous ones as they pass through such zone, said pieces (12) thus being cut according to a quadrangular portion.

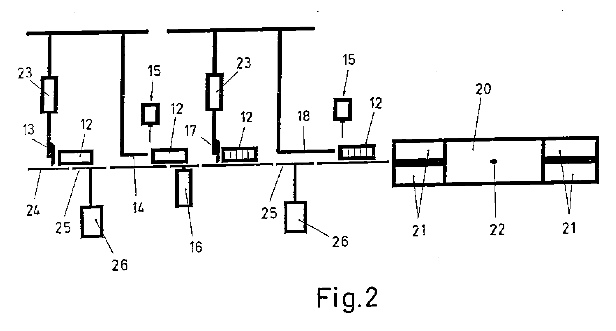

According to an embodiment, the pushers (13 and 17) which do not act in the cutting zones (15 and 19) can be provided with a raising cylinder (23), as shown in Figure 2, which allows raising said pushers (13 and 17) for the backward movement thereof to the initial positions for driving the successive product pieces (12), overcoming such pieces in the backward movement.

The pushers (14 and 18) acting in the cutting zones (15 and 19) cannot, where appropriate, be raised for the backward movement since the arrangement of the water jet cutters of the mentioned zones (15 and 19) prevent it, therefore in the part prior to said cutting zones (15 and 19) the surface (24), on which the product pieces (12) are supported and move is provided with zones (25) supported by means of cylinders (26), such that said zones (25) can be lowered in order to conceal the product pieces (12) located thereon at a lower level, thus allowing the backward movement of the mentioned pushers (14 and 18) to their initial positions.

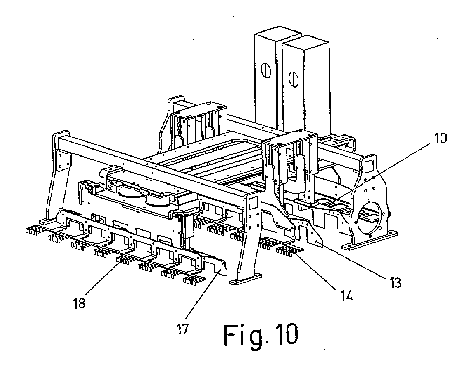

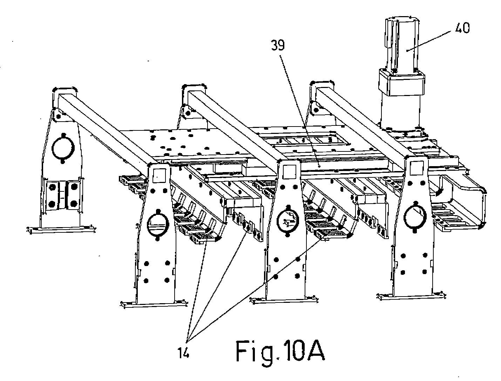

An embodiment is provided, however, within the scope of the invention in which the product pieces are driven in all phases of the process by groups of pushers (14) which are integrally associated to a carrier structure (39), by means of which a joint movement of all the groups of pushers (14) is carried out at the same time by means of a single drive motor (40), as observed in Figure 10A, carrying out alternating forward and backward movements in order to push the product pieces in the forward movements and recover the initial position with another push in the backward movements.

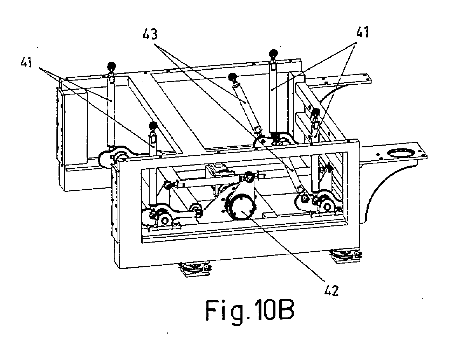

The surface (not depicted) for supporting the product pieces in the process of the cutting system is arranged in this case on a support formed by an assembly of four vertical connecting rods (41) which are actuated together by means of a single motor (42), as shown in Figure 10B, such that with the vertical movement of said connecting rods (41) an alternating raising and lowering movement of the surface for supporting the product pieces to be cut is carried out.

Thus, when said surface for supporting the product pieces is in the raised position, it allows driving the product pieces by means of the pushers (14), whereas when it lowers to the lower position it allows the backward movement of the pushers (14) in order to recover the initial position, without interfering with the product pieces arriving from behind the respective zones.

In the same functional assembly supporting the mentioned surface for supporting the product pieces in the cutting process, together with the vertically moving connecting rods (41) of said surface, two other connecting rods (43) are associated which are incorporated in the assembly such that they are actuated at the same time as the connecting rods (41) by means of the same motor (42).

These two complementary connecting rods (43) support partial zones of the platform for supporting the product pieces which result from cutting the initial slices in the zone for the passage from said cutting to the subsequent cutting paths for obtaining the portions to be packed, therefore an uneven movement between the adjacent zones for the passage of the mentioned product pieces resulting from cutting the initial slices is achieved, an effective separation of said product pieces thus being obtained by a movement in height of alternating zones for the passage thereof.

The zones of the rotators (16) in which the product pieces are rotated between the respective zones (15 and 19) for making perpendicular cuts are all actuated by means of a single motor (44), from which an assembly of consecutive gears (46) is actuated by means of a transmission (45), with respect to which gears the rotating zones for supporting the product pieces distributed in the transverse direction of the installation are coupled.

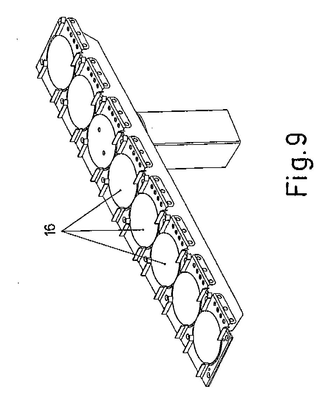

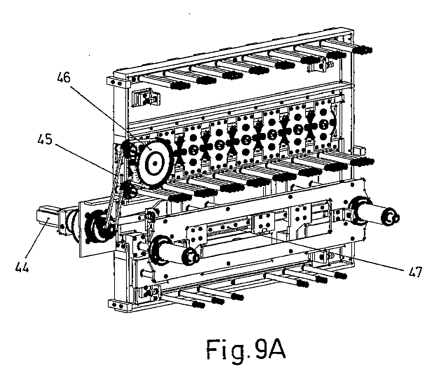

Figure 9A depicts a perspective view of this part of the installation seen from the lower part, in which only one gear (46) of those which are associated to the rotating zones for supporting the product pieces is shown for better clarity of the drawing.

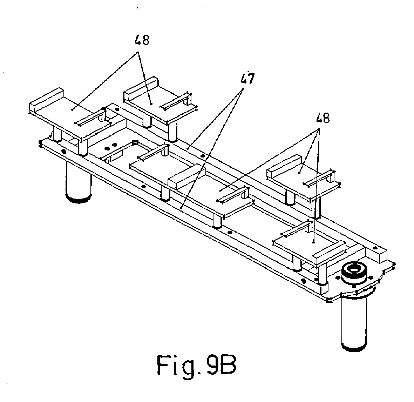

By means of the same motor (44) actuating the change of position of the product pieces for the perpendicular cuts, the movement of transverse structures (47) is in turn actuated by means of transmission connecting rods, on which structures zones (48) for the passage of the product pieces are supported, as depicted in Figure 9B, such that with the movement of said structures (47) the product pieces are correctly channeled through the corresponding cutting paths after the rotation.

After the cutting zone (19), the pieces (12) portioned in a grid are introduced into an unloading device (20) which supplies them to a subsequent packing chain.

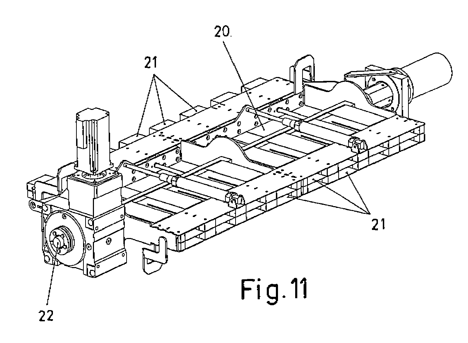

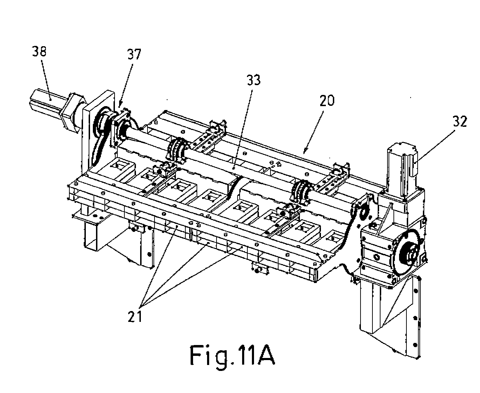

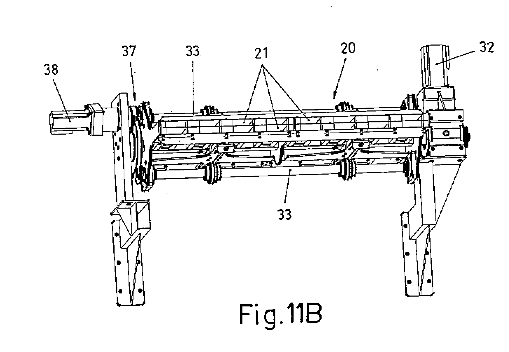

As shown in Figure 11, the unloading device (20) is formed by compartments (21) at the ends, which can have two positionable heights with respect to the output of the product pieces (12) from the cutting process, said unloading device (20) being an element which can be turned over about a shaft (22) to alternate the positions of the end compartments (21) between the situation for receiving the product pieces (12) and the situation for removing same in a subsequent packing chain.

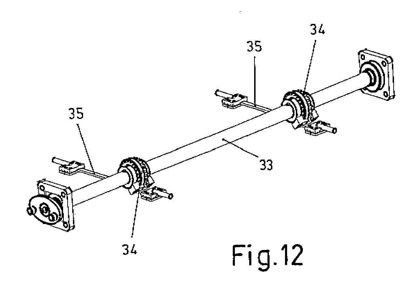

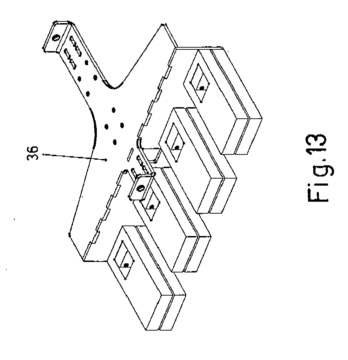

According to a particular embodiment (Figures 11A and 11B), the rotation actuation for turning over said structure of the unloading device (20) is actuated by means of a motor (32), whereas in the upper part and in the lower part of this structure which can be turned over, respective transverse bars (33) are arranged, which bars (Figure 12) incorporate pinions (34) linked to corresponding racks (35) on which pushers (36) as depicted in Figure 13, or pushers of another similar type are secured.

The bars (33) determine an engaging and disengaging coupling (37) depending on their position with respect to a motor (38), such that upon turning the structure of the unloading device (20) over, one of the bars (33) is coupled to the transmission of the motor (38), whereas alternately the other bar is decoupled from said transmission, such that the bar (33) which in each case is coupled to the transmission of the motor (38) is the bar that corresponds to the actuation of the pushers (36) of the side of the output delivery of the product portions from the unloading device (20) towards the subsequent packing process.

## Claims

1. A system for cutting food products for packing purposes, for cutting the applied products in portions intended to be housed in the applied packages, **characterized in that** it comprises an area (1) from which original large blocks (2) of the products are supplied, followed by a cutting zone (3) in which the original blocks (2) are divided into flat slices (4) which are distributed through parallel cutting channels, in which the slices (4) are divided into pieces (12) which are in turn cut into a quadrangular portion, the portioned pieces (12) being collected in an unloading device (20) for supplying them to a subsequent packing chain.

2. A system for cutting food products for packing purposes according to claim 1, **characterized in that** the cutting zone (3) includes a control (7) measuring the size of the product blocks (2), determining the width of the cut of the slices (4) so that there is an exact number thereof in the division of each of the blocks (2).

3. A system for cutting food products for packing purposes according to claim 1, **characterized in that** there is arranged in front of the process for cutting the slices (4) a conveyor (8) which distributes the slices (4) to positions corresponding with the different cutting channels, said conveyor (8) comprising a device (9) which brings the slices (4) down to a horizontal position in which they are deposited in front of the cutting channels.

4. A system for cutting food products for packing purposes according to claim 1, **characterized in that** in the cutting channels the slices (4) are taken through a water jet cutter zone (11) in which the slices (4) are divided into pieces (12) which are channeled through different cutting paths.

5. A system for cutting food products for packing purposes according to claims 1 and 4, **characterized in that** the product pieces (12) in the cutting paths successively pass through respective water jet cutter zones (15 and 19), between which a rotator (16) is arranged in each path which rotates the pieces (12) to a perpendicular position in the transport, such that said pieces (12) receive in the zones (15 and 19) perpendicular cuts determining a quadrangular portion thereof.

6. A system for cutting food products for packing purposes according to claim 1, **characterized in that** according to an embodiment the unloading device (20) for collecting the portioned product pieces (12) consists of an element which can be turned over about a shaft (22), incorporating at the ends respective assemblies of compartments (21), which by means of turning over the mentioned unloading device (20) alternate their position between a situation for receiving the product pieces (12) at the output of the cutting process and a situation for supplying the portioned pieces (12) to the packing chain.

7. A system for cutting food products for packing purposes according to claim 1, **characterized in that** the movement of the product pieces to be cut is carried out on a surface which can be raised and lowered, the movement of the product pieces on said surface being actuated by means of assemblies of longitudinal pushers (14) acting in the different successive zones of the cutting process, all the assemblies of said pushers (14) being integral on a carrier structure (39), by means of which all pushers (14) are moved together and at the same time in forward pushing movements and backward position recovery movements with a single motor (40), the height position thereof being maintained.

8. A system for cutting food products for packing purposes according to claim 1, **characterized in that** the surface for sliding the product pieces to be cut is arranged on a support formed by four vertical connecting rods (41) which are actuated together by a single motor (42) transmitting a simultaneous actuation to all of them.

9. A system for cutting food products for packing purposes according to claim 8, **characterized in that** two complementary connecting rods (43) are associated to the assembly of the connecting rods (41) supporting the surface for sliding the product pieces to be cut, such complementary connecting rods being actuated together with the mentioned connecting rods (41) and by the same motor (42), which complementary connecting rods (43) are linked to alternating zones for the passage of the product pieces after cutting the formation thereof in order to make the separation of said pieces effective.

10. A system for cutting food products for packing purposes according to claim 1, **characterized in that** the zones for rotating the product pieces for the perpendicular cuts thereof are arranged in relation to a correlation of successive gears (46), which are actuated together by means of a single motor (44), by means of which transverse structures (47) are also actuated which channel the product pieces through the corresponding cutting paths after the rotation.

11. A system for cutting food products for packing purposes according to claim 1, **characterized in that** the portions of the cut product intended for packing are collected and unloaded by means of an unloading device (20) incorporating in the upper part and in the lower part respective transverse bars (33) with which pushers (36) are connected by means of rack (35) and pinion (34) transmissions, which pushers act respectively towards both in front of the unloading device (20), the mentioned bars (33) being connected such that they engage and disengage with respect to a coupling (37) with a rotating drive motor (38), depending on the turning over of the unloading device (20), such that in each case the bar (33) corresponding to the pushers (36) acting towards the front of the unloading device (20) which is in the unloading part is coupled to the transmission of the motor (38), whereas the other bar (33) is decoupled from said transmission.
